# EUROPEAN PATENT APPLICATION

(11) **EP 4 793 790 A1**
(43) Date of publication of application: **19.08.2026**
(21) Application number: 24888066.8
(22) Date of filing: 07.11.2024
(51) Int. Cl.: G06F 16/2455

(54) **DATA PROVENANCE METHOD AND APPARATUS, AND RELATED DEVICE**

(30) Priority: 09.11.2023 CN 202311492215
(71) Applicant: HUAWEI TECHNOLOGIES CO., LTD., Shenzhen 518129 (CN)
(72) Inventor: QIU, Jian, Shenzhen, Guangdong 518129 (CN); LI, Ji, Shenzhen, Guangdong 518129 (CN); LIANG, Qunfeng, Shenzhen, Guangdong 518129 (CN); OUYANG, Wenxiang, Shenzhen, Guangdong 518129 (CN); GUO, Juan, Shenzhen, Guangdong 518129 (CN)
(74) Representative: Isarpatent
(86) International application number: PCT/CN2024/130628
(87) International publication number: WO 2025/098455

(57) **Abstract**

A data tracing method and apparatus, and a related device relate to the field of databases. The tracing method includes: A data tracing system obtains a tracing request, where the tracing request is used to request to find a cause of an anomaly of a to-be-traced record in a result table; the tracing request includes a tracing parameter, the result table includes a tracing field, a field value of the tracing field includes one or more table identifiers and a filter condition corresponding to each table identifier, the result table is obtained based on source data tables corresponding to the one or more table identifiers, and the tracing parameter includes a field value of a tracing field corresponding to the to-be-traced record. The data tracing request determines a tracing statement based on the tracing request, and executes the tracing statement, to determine the cause of the anomaly corresponding to the to-be-traced record. The tracing field is recorded in the result table, so that when an anomaly occurs in a calculation result involving a large quantity of data tables and a large quantity of calculation processes, a cause of the anomaly can be quickly located. This improves efficiency of data analysis and anomaly handling.

## Description

This application claims priority to Chinese Patent Application No. 202311492215.5, filed with the China National Intellectual Property Administration on November 9, 2023 and entitled "DATA TRACING METHOD AND APPARATUS, AND RELATED DEVICE", which is incorporated herein by reference in its entirety.

### TECHNICAL FIELD

The present invention relates to the field of computer technologies, and in particular, to a data tracing method and apparatus, and a related device.

### BACKGROUND

In a process of computing results based on data in databases, a large quantity of data tables and a plurality of calculation processes are typically involved. A single calculation result may require hundreds of tables and go through over hundreds of steps. Once an anomaly occurs in the calculation result, service personnel cannot quickly trace the calculation processes, and instead have to rely on R&D engineers to analyze code to locate a cause of the problem.

### SUMMARY

This application provides a data tracing method and apparatus, and a related device, so that when an anomaly occurs in a calculation result involving a large quantity of data tables and a large quantity of calculation processes, a cause of the anomaly can be quickly located, to improve efficiency of data analysis and anomaly handling.

According to a first aspect, this application provides a data tracing method, including: obtaining a tracing request, where the tracing request is used to request to find a cause of an anomaly of a to-be-traced record in a result table, the tracing request includes a tracing parameter, the result table includes a tracing field, a field value of the tracing field in the result table includes one or more table identifiers and filter conditions corresponding to the one or more table identifiers, the result table is obtained based on source data tables corresponding to the one or more table identifiers in the tracing field, and the tracing parameter includes a field value of a tracing field corresponding to the to-be-traced record, and the to-be-traced record is any record in the result table; and determining a tracing statement based on the tracing request, and executing the tracing statement to determine the cause of the anomaly corresponding to the tracing request, where the tracing statement is used to locate original records corresponding to the to-be-traced record in the one or more source data tables, and the to-be-traced record is obtained based on the original records in the one or more source data tables.

In a process of obtaining the result table based on the one or more source data tables, the tracing field for tracing is added to the result table, to record a source of each record in the result table. The value of the tracing field includes the one or more table identifiers and the filter condition corresponding to each table identifier. The one or more table identifiers indicate the one or more source data tables used to obtain the result table. When a record in the result table needs to be traced, for example, when a user finds that an anomaly occurs in a record in the result, a corresponding tracing statement may be determined based only on a value of a tracing field in the record, and an original record corresponding to the to-be-traced record may be determined by executing the tracing statement. If an anomaly occurs in the record, a cause of the anomaly is determined. The tracing field is recorded in the result table, so that when an anomaly occurs in a calculation result involving a large quantity of data tables and a large quantity of calculation processes, a cause of the anomaly can be quickly located. This improves efficiency of data analysis and anomaly handling.

In a possible implementation, each of the one or more table identifiers corresponds to one source data table, a filter condition corresponding to a first table identifier is a condition for filtering a first source data table when the tracing statement is executed, the first table identifier is one of the one or more table identifiers, and an identifier of the first source data table is the first table identifier.

A field value of a tracing field corresponding to each record includes one or more table identifiers, each table identifier corresponds to a filter condition, and a filter condition corresponding to any table identifier is used to filter a source data table corresponding to the table identifier, to obtain the original record corresponding to the to-be-traced record.

In a possible implementation, before the tracing request is obtained, the method further includes: obtaining configuration information of a first calculation process, where the configuration information includes input information, output information, and a field mapping relationship, the input information includes the one or more table identifiers, the output information includes a target field included in the result table, and the field mapping relationship indicates a mapping relationship between a source field in the one or more source data tables and a corresponding destination field in the result table; generating service logic code based on the configuration information of the first calculation process, where the first calculation process is one of one or more calculation processes included in a service; and when executing the service including the first calculation process, executing the service logic code corresponding to the first calculation process, to obtain the result table, and generating a field value of a tracing field corresponding to each record in the result table, where the filter conditions corresponding to the one or more table identifiers are generated based on the configuration information.

In an application scenario, calculation of a plurality of services usually needs to be implemented based on a data table in a database. For example, a tax scenario includes services such as export tax refund and software tax refund, and all these services need to be implemented based on financial data in a database. A same data table and calculation process may be used for calculation of different services. For example, the export tax refund service requires export contract data, invoice data, customs declaration data, and payment data. The software tax refund service requires software contract data, invoice data, and software product data. Both services require use of invoice data, and a calculation process of loading the invoice data. Therefore, the user can first configure a plurality of calculation processes, complete configuration of calculation processes related to different services, and then configure, based on requirements of the different services, the calculation process included in the service, so that configuration efficiency of the different services can be improved.

In a possible implementation, the configuration information further includes a calculation process type corresponding to the first calculation process, and the calculation process type indicates a parsing rule for a calculation process. Generating the service logic code based on the configuration information of the first calculation process includes: generating the service logic code based on the configuration information of the first calculation process and the calculation process type corresponding to the first calculation process, where the calculation process type includes a general type and a customized type. The general type includes a data set type, a join type, and a derivation type, the data set type indicates that a calculation process is to load data or output data, the join type indicates that a calculation process is to process data between two or more tables, and the derivation type indicates that a calculation process is to add a column to a data table. The customized type is a calculation type tailored to a specific application scenario, in a tax scenario, the customized type includes a conversion type, an allocation type, and an accumulation type, the conversion type indicates that a calculation process is to perform exchange rate conversion, the allocation type indicates that a calculation process is to allocate amounts based on contract products, and the accumulation type indicates that a calculation process is to perform annual accumulation, quarterly accumulation, or the like.

The calculation process type is configured, and different calculation process types correspond to preset parsing rules. After the user configures a calculation process, the calculation process is parsed according to a preset parsing rule corresponding to a calculation process type, so that parsing efficiency and efficiency of generating corresponding service logic code can be improved. In addition, in a determined application scenario, a parsing rule corresponding to a calculation process involved in the application scenario is designed. Service personnel only need to configure input information, output information, and a calculation process type that are required in the calculation process, and a compute device may parse the calculation process according to the parsing rule corresponding to the calculation process type. The service personnel do not need to execute internal logic, so that difficulty of configuration by the service personnel can be reduced.

In a possible implementation, determining the tracing statement based on the tracing request includes: obtaining the first table identifier and the filter condition corresponding to the first table identifier in the tracing request; and determining a first tracing statement based on the first table identifier and the filter condition corresponding to the first table identifier, where the first tracing statement includes the first table identifier and the filter condition corresponding to the first table identifier, the first table identifier indicates a source data table queried by the first tracing statement, the filter condition corresponding to the first table identifier is a filter condition corresponding to a conditional statement in the first tracing statement, and each of the one or more source data tables corresponds to one tracing statement.

A result table is obtained based on one or more source data tables, and a field value of a tracing field corresponding to a record in the result table includes one or more table identifiers and a filter condition corresponding to each table identifier. When the tracing statement is determined based on the tracing request, a tracing statement for obtaining an original record from a source data table corresponding to a table identifier is generated based on a filter condition corresponding to the table identifier. In this way, each source data table corresponds to one tracing statement, and an original record corresponding to the to-be-traced record in each source data table can be accurately determined.

In a possible implementation, executing the tracing statement to determine the cause of the anomaly corresponding to the tracing request includes: executing the first tracing statement, loading the first source data table based on the first table identifier in the first tracing statement, and filtering data in the first source data table based on the filter condition corresponding to the first table identifier, to determine a cause of an anomaly corresponding to the tracing request in the first source data table.

After the tracing statement is determined based on the tracing request, each tracing statement is executed, an original record corresponding to the to-be-traced record in a source data table is determined from the source data table, and a cause of an anomaly of the to-be-traced record in the result table is determined based on the original record.

In a possible implementation, before the tracing request is obtained, the method further includes: determining that an anomaly occurs in data recorded in the to-be-traced record; obtaining the field value of the tracing field corresponding to the to-be-traced record; and generating the tracing request based on the field value of the tracing field corresponding to the to-be-traced record.

After the compute device obtains the result table, if the compute device detects that an anomaly occurs in a record in the result table. Alternatively, after the compute device obtains the result table, the user can view the result table, and in a viewing process, the user determines that an anomaly occurs in a record. The user can select the record, so that the to-be-traced record is obtained. After determining the to-be-traced record, the compute device may obtain the tracing request based on the field value of the tracing field corresponding to the to-be-traced record in the result table.

In a possible implementation, the method further includes: obtaining a service identifier of a to-be-executed service, where the to-be-executed service includes one or more calculation processes; and determining, based on the service identifier, the one or more calculation processes corresponding to the to-be-executed service, and executing the one or more calculation processes, to obtain a result corresponding to the to-be-executed service, where the first calculation process is one of the one or more calculation processes included in the to-be-executed service.

The user can first configure a plurality of calculation processes, complete configuration of calculation processes related to different services, and then configure, according to requirements of the different services, calculation processes included in the service. When the user needs to know a result corresponding to a service, the user only needs to input a service identifier of the service, and the compute device may determine, based on the service identifier, one or more calculation processes corresponding to the service, and then execute each calculation process to obtain a result corresponding to the service.

In a possible implementation, the configuration information further includes a field filter condition, and the field filter condition is used to select data that satisfies the field filter condition from a corresponding source data table.

In a process of configuring the configuration information of the first calculation process, the field filter condition of the source data table further needs to be configured. The field filter condition is used to select the data that satisfies the field filter condition from the source data table. For example, for a source data table, the source data table includes a plurality of records of a year, but only data of a 1st quarter needs to be used in the first calculation process, and the field filter condition is used to select data used for the first calculation process from the source data table.

According to a second aspect, this application provides a data tracing apparatus. The data tracing apparatus includes modules configured to perform the data tracing method according to any one of the first aspect or the possible implementations of the first aspect.

According to a third aspect, this application provides a compute device, including a processor and a memory. The processor executes instructions stored in the memory, to implement the method according to any one of the first aspect or the possible implementations of the first aspect.

According to a fourth aspect, this application provides a computer-readable storage medium, including computer program instructions. When the computer program instructions are executed by a compute device, the compute device implements the method according to any one of the first aspect or the possible implementations of the first aspect.

### BRIEF DESCRIPTION OF DRAWINGS

FIG. 1 is a diagram of an application scenario according to this application;
FIG. 2 is a diagram of a metadata configuration interface according to this application;
FIG. 3 is a diagram of a calculation process configuration interface according to this application;
FIG. 4 is a diagram of reference relationships between calculation processes according to this application;
FIG. 5 is a diagram of a calculation chain configuration interface according to this application;
FIG. 6 is a schematic flowchart of a data tracing method according to this application;
FIG. 7 is a diagram of obtaining a result table based on a source data table according to this application;
FIG. 8 is another diagram of obtaining a result table based on a source data table according to this application;
FIG. 9 is a diagram of a structure of a data tracing apparatus according to this application;
FIG. 10 is a diagram of a compute device according to this application; and
FIG. 11 is a diagram of a compute device cluster according to this application.

### DESCRIPTION OF EMBODIMENTS

To resolve a problem that it is difficult to trace a cause of an anomaly when the anomaly occurs in a calculation result obtained based on a large quantity of data tables, this application provides a data tracing method. In a process in which a data tracing system obtains a result table based on one or more data tables, a tracing field used for tracing is added to the result table, and the tracing field is used to record an original record corresponding to each record in the result table. When a to-be-traced record in the result table needs to be traced, the data tracing system can determine, based on a value of a tracing field in the record, an original record corresponding to the to-be-traced record. The tracing field to the result table is added, so that when a calculation result that involves a large quantity of data tables and a large quantity of calculation processes is traced, an original record corresponding to a record in the calculation result can be quickly located. When an anomaly occurs in the calculation result, a cause of the anomaly can be quickly located, thereby improving efficiency of data analysis and anomaly handling.

The following describes in detail a data tracing method provided in this application with reference to the accompanying drawings provided in this application.

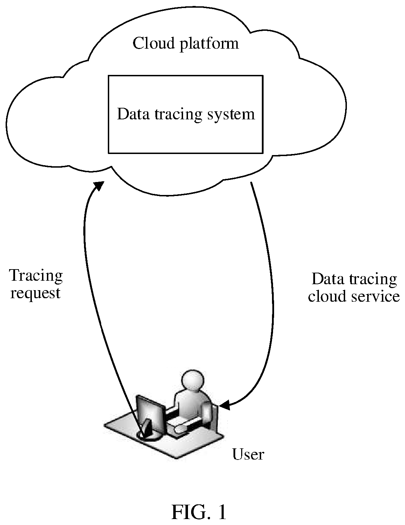

The data tracing method provided in this application is applied to a data tracing system 100. The data tracing system 100 may be a hardware system, or may be a software system deployed on a hardware device, or may be implemented by using a combination of hardware and software. When the data tracing system 100 is a software system, the data tracing system 100 may be deployed in a data center of a cloud platform. For example, the data tracing system 100 is a cloud service provided by a cloud service provider. In specific implementation, the data tracing system 100 may be independently deployed on one computing instance in the data center of the cloud platform, or may be distributed on a plurality of computing instances in the data center of the cloud platform. The computing instance includes a server, a virtual machine, a container, and the like. As shown in FIG. 1, the data tracing system 100 is deployed in a data center of a cloud platform, and is abstracted as a cloud service by a cloud service provider. A user can log in to the cloud platform by using a client or a web page, and select and purchase, on the cloud platform, the cloud service corresponding to the data tracing system 100. After the cloud service is purchased successfully, the cloud platform provides a data tracing service for the user by using the data tracing system 100.

The data tracing system 100 may also be deployed on a terminal device. For example, the data tracing system 100 is source code or a component that can be run on the terminal device. The terminal device includes a mobile phone, a notebook computer, a desktop computer, a tablet computer, or the like.

In a possible deployment manner, some functional modules in the data tracing system 100 are deployed on a back-end compute device or compute device cluster (including at least one compute device), and some functional modules are deployed on a front-end terminal device used by a user. For example, the data tracing system 100 displays a result table at a front end. When the user needs to trace a record in the result table, the data tracing system 100 receives a to-be-traced record selected by the user in the result table at the front end, and then determines an original record corresponding to the to-be-traced record through a back end.

In this application, the cloud platform may be a cloud platform of a central cloud, a cloud platform of an edge cloud, or a cloud platform including a central cloud and an edge cloud. This is not specifically limited in this application. In addition, when the cloud platform is the cloud platform including the central cloud and the edge cloud, the data tracing system 100 may be partially deployed on a cloud platform of the edge cloud, and partially deployed on a cloud platform of the central cloud.

Next, based on the data tracing system 100 shown in FIG. 1, the data tracing method provided in this application is further described. According to the data tracing method, a record in a result table can be quickly and accurately traced, to obtain original records that correspond to the record in the result table and that are in one or more data tables. The result table is obtained based on the one or more data tables. If the data tracing system or the user finds that an anomaly occurs in a record in the result table, or the user wants to view data in a data table that the record in the result table is obtained from, the user only needs to select the record, and the data tracing system 100 can find a source data table corresponding to the result table and an original record corresponding to the record in the source data table. If the to-be-traced record is a record in which an anomaly occurs, the data tracing system 100 traces back to the original record corresponding to the to-be-traced record, that is, locates a cause of the anomaly of the to-be-traced record.

It should be understood that data tracing performed by the data tracing system 100 is to trace a data source based on the result table. The result table is a result obtained by calculation based on one or more source data tables. Before data tracing is performed, a metadata configuration process and a calculation process configuration process are further included. Metadata configuration is to configure the source data table and a field required in a calculation process. Calculation process configuration is to configure input information, output information, and a field mapping relationship of each calculation process. The result table is obtained by processing the source data table based on calculation logic configured in the calculation process. The input information includes an input name or identifier of the source data table, and a name or an identifier of a source field in the source data table. The output information includes a name or an identifier of an output target field, and may further include a name or an identifier of an output result table. The field mapping relationship indicates a relationship between a target field in the result table and a source field in the source data table. After the user completes metadata configuration and calculation process configuration, the data tracing system 100 can complete calculation based on the calculation process configured by the user, to obtain a calculation result. The result table may be a data table output in any calculation process.

The following describes, with reference to the accompanying drawings, the metadata configuration process and the calculation process configuration process that are provided in this application.

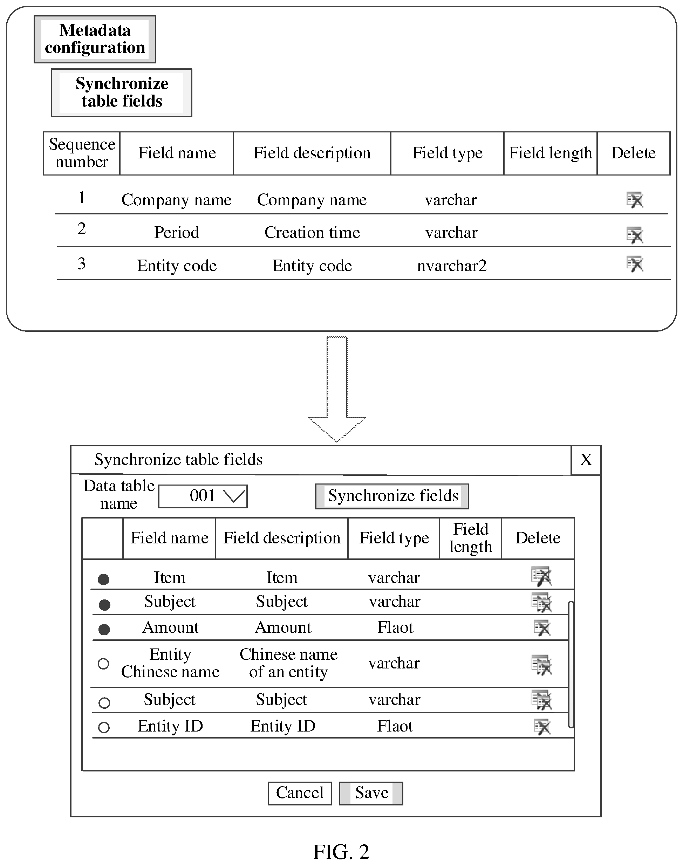

Metadata configuration is used to configure a data table and a field required in a calculation process. FIG. 2 is a diagram of a metadata configuration interface according to this application. The metadata configuration interface includes a "Synchronize table field" control. After detecting an operation of triggering the "Synchronize table field" control by a user, the data tracing system 100 displays a table field synchronization interface. For example, the data tracing system 100 displays the metadata configuration interface on a terminal device used by the user. The user clicks the "Synchronize table field" control by using a mouse, and the terminal device detects the trigger operation of the user, and displays the table field synchronization interface on the terminal device. The table field synchronization interface includes a "Data table name" input box. After the user enters or selects a data table name in the data table name input box and triggers a "Synchronize fields" control on the table field synchronization interface, the data tracing system 100 can display a field name of the data table selected by the user and related information of the field, for example, a field description, a field type, and a field length. The user can select whether to synchronize a field by selecting a selection box before a field name. After selecting a field that needs to be synchronized on the table field synchronization interface, the user can trigger a "Save" control on the interface to implement field synchronization. After detecting that the operation of triggering the "Save" control by the user, in response to the operation, the data tracing system 100 synchronizes the field selected by the user to the metadata configuration interface.

As shown in FIG. 2, three fields, namely, "Company name", "Period", and "Entity code", have been synchronized on the metadata configuration interface. The user selects a data table named 001 on the table field synchronization interface, and then selects three fields, namely, "Project", "Subject", and "Amount", in the data table. After the user triggers the "Save" control, the data tracing system 100 synchronizes the three fields to the metadata configuration interface in response to the saving operation, and completes metadata configuration.

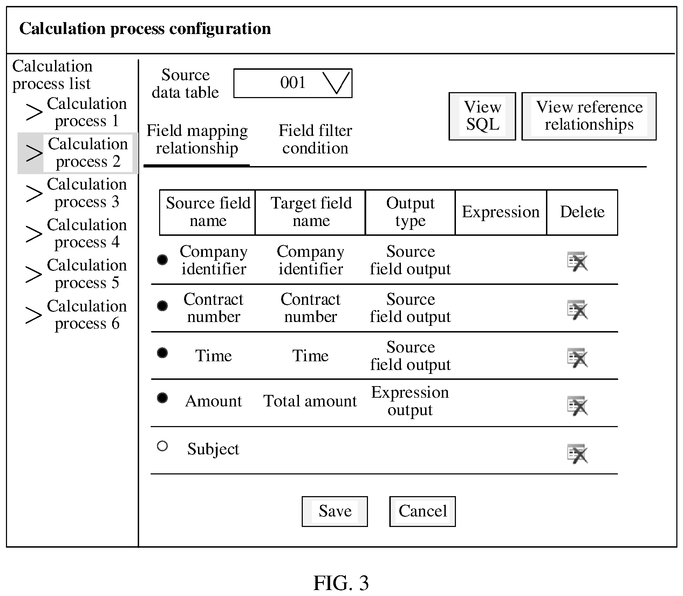

FIG. 3 is a diagram of a calculation process configuration interface according to this application. As shown in the figure, the calculation process configuration interface includes a source data table input box, and the user can enter, in the source data table input box, a name of a source data table that needs to be used in a calculation process. After the data tracing system 100 receives the data table name entered by the user, the data tracing system 100 obtains a name of a source field included in the source data table corresponding to the data table name, and displays, in a "Field mapping relationship" part, the name of the source field included in the source data table. The source field included in the source data table is a field that is in the source data table and that is selected by the user in the metadata configuration process. The user can configure a field mapping relationship between a source field in a source data table and a target field in a result table in the "Field mapping relationship" part. If the user chooses to use a source field in the source data table in a calculation process, the user enters a name of a target field under a target field name corresponding to the source field and configures an output type. The output type indicates a field mapping relationship between the source field and the target field. The output type includes types such as source field output and expression output. The source field output means that a field value the source field in the source data table is not processed, and the source field in the source data table is directly used as the target field in the result table. The expression output means that a value of the source field is calculated according to a configured expression and then output to a corresponding target field in the result table. If the user selects the output type as expression output, the user further needs to configure an expression. An input of the expression is the source field, and an output is the target field. Optionally, the field mapping relationship further includes a data type of the source field, a data length of the source field, and the like.

For example, as shown in FIG. 3, the user selects a data table named "001" as the source data table. The source data table includes five source fields: "Company identifier", "Contract number", "Time", "Amount", and "Subject". After detecting a data table name "001" entered by the user, the data tracing system 100 displays names of the five source fields under "Source field names" in the "Field mapping relationship" part. The user can select the source field required in the calculation process. As shown in the figure, the user selects four source fields: "Company identifier", "Contract number", "Time", and "Amount" in a calculation process 2, and configures names and output types of target fields corresponding to the source fields. For example, the user selects a contract number as a source field, a corresponding target field name is also a contract number, and an output type is source field output. Therefore, the calculation process 2 includes: using the field whose field name is "Contract number" in the source data table "001" as a "Contract number" field in the result table. For another example, the user selects an amount as a source field, a corresponding target field name is total amount, an output type is expression output, and an expression (not shown in the figure) for calculating a total amount based on the amount is configured in an expression. Therefore, the calculation process 2 includes calculating data in a field whose field name is amount in the source data table "001" according to the configured expression, and using calculated data as data of the total amount field in the target table.

In a possible implementation, the calculation process configuration interface further provides a field filter condition configuration, and the field filter condition configuration is used to configure a rule for filtering a field in the source data table. For example, the source data table includes a time field, and the time field records time when each record in the source data table is generated. However, in the calculation process, only data of a current month in the source data table needs to be used. The user may configure a filter rule for the time field in the field filter condition to select data that satisfies a requirement.

In a possible implementation, during calculation process configuration, a calculation process type further needs to be configured, and the calculation process type includes a general type and a customized type. The general type includes a data set type, a join type, a derivation type, and the like. The data set type indicates that a calculation process is to load data or output data. The join type indicates that a calculation process is to process data between two or more tables. The derivation type indicates that a calculation process is to add a column to a data table. The customized type is a calculation type tailored to a specific application scenario. For example, in a tax scenario, the customized type includes a conversion type, an allocation type, and an accumulation type. The conversion type indicates that a calculation process is to perform exchange rate conversion. The allocation type indicates that a calculation process is to allocate amounts based on contract products. For example, if a contract includes 10 products, an amount of the contract is to be allocated to the 10 products. The accumulation type indicates that a calculation process is to perform annual accumulation, quarterly accumulation, or the like.

The calculation process type indicates a parsing rule for a calculation process. The data tracing system 100 parses configuration information of the calculation process based on the calculation process type, to generate corresponding logic code, for example, structured query language (structured query language, SQL). If the calculation type is the conversion type, the data tracing system 100 generates SQL for exchange rate conversion based on the configuration information of the calculation process and a parsing rule corresponding to the conversion type. If the calculation type is the allocation type, the data tracing system 100 generates SQL for contract product amount allocation based on the configuration information of the calculation process and a parsing rule corresponding to the conversion type.

It should be noted that there may be a reference or association relationship between different calculation processes. For example, between different calculation processes in a reference relationship, a calculation result output by a calculation process is an input of another calculation process. If an input of a calculation process is an output of another calculation process, there is a reference relationship between the two steps. For example, an input of a calculation process 3 is an output of a calculation process 1 and an output of a calculation process 2. When a calculation process executed later is configured, input information further includes a calculation process name or a calculation process identifier that are used to obtain, based on the calculation process name or the calculation process identifier, a calculation result output by a calculation process executed earlier. For example, when input information of the calculation process 3 is configured, the input information includes a name of the calculation process 1 and a name of the calculation process 2. It should be understood that, when the user configures each calculation process, the user configures a name or an identifier of each calculation process.

After configuration of the calculation process is completed, the data tracing system 100 can verify configuration information of the calculation process, to determine whether the configuration information satisfies a requirement. If the configuration information is incorrect, the system can prompt the user to modify the configuration information. If the configuration information satisfies the requirement, the data tracing system 100 can generate, based on the configuration information, logic code corresponding to the calculation process.

Optionally, the data tracing system 100 can further generate a tracing statement based on the configuration information of the calculation process. Related descriptions of the tracing statement are described in detail below, and are not described herein.

In a possible implementation, as shown in FIG. 3, the calculation process configuration interface can provide a "View SQL" control. After detecting an operation of triggering the "View SQL" control by the user, the data tracing system 100 can display an SQL statement corresponding to a current calculation process.

As shown in FIG. 3, the user can configure a plurality of calculation processes on the calculation process configuration interface. A calculation process list is displayed on the left in FIG. 3. The calculation process list is used to display a calculation process that has been configured by the user currently, for example, the calculation process 1 to a calculation process 6 that have been configured in FIG. 3. The user can select a calculation process from the calculation process list on the left, for example, click a name of the calculation process by using a mouse. After detecting the operation of the user, the data tracing system 100 displays configuration information of the corresponding calculation process based on the name of the calculation process selected by the user.

In a possible implementation, the data tracing system 100 can record a reference relationship between calculation processes based on configuration information of the calculation processes, and can display a reference relationship between different calculation processes. As shown in FIG. 3, the calculation process configuration interface provides a "View reference relationship" control. After detecting that an operation of triggering the "View reference relationship" control by the user, the data tracing system 100 displays a reference relationship between a current calculation process and another calculation process.

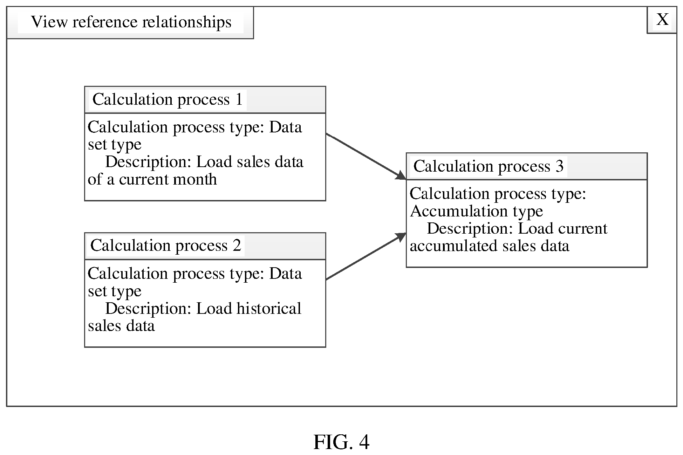

For example, if the calculation process 1 and the calculation process 2 are loading steps, the calculation process 1 is loading data of a current month, the calculation process 2 is loading historical data, and the calculation process 3 is a process of calculating current accumulated data. The calculation process 3 needs to use an output result of the calculation process 1 and an output result of the calculation process 2. That is, the calculation process 3 has reference relationships with the calculation process 1 and the calculation process 2. After the user completes configuration of the calculation process 3, the data tracing system 100 can record the foregoing reference relationships. After detecting that the operation of triggering the "View reference relationship" control by the user, the data tracing system 100 displays the reference relationships between the calculation process 3 and the calculation process 1 and the calculation process 2. As shown in FIG. 4, FIG. 4 is a diagram of reference relationships between calculation processes according to this application. It should be understood that, if both the calculation process 1 and the calculation process 2 are for data loading, calculation process types of both the calculation process 1 and the calculation process 2 are data set types, and the calculation process 3 is an accumulation type.

The foregoing calculation process configuration interface can implement configuration of a plurality of calculation processes. Each calculation process needs to use different fields in a same data table, or use different fields in different data tables. Fields in different data tables in a database and related information of the fields are synchronized by using the metadata configuration interface. When the user configures a calculation process, the data tracing system 100 can display an existing data table in the database to the user, and after the user selects a data table, the data tracing system 100 can quickly obtain a field in the data table and related information of the field. This improves a system response speed and configuration efficiency and improves user configuration efficiency.

In a possible implementation, in an application scenario, calculation of a plurality of services usually needs to be implemented based on a data table in a database. For example, a tax scenario includes services such as an export tax refund service and a software tax refund service, and all these services need to be implemented based on financial data in a database. A same data table and calculation process may be used for calculation of different services. For example, the export tax refund service requires export contract data, invoice data, customs declaration data, and payment data. The software tax refund service requires software contract data, invoice data, and software product data. Both services require use of invoice data, and a calculation process of loading the invoice data. Therefore, the user can first configure a plurality of calculation processes, complete configuration of calculation processes related to different services, and then configure, based on requirements of the different services, the calculation process corresponding to the service. For example, the user requires calculation of a service 1, a service 2, and a service 3. Calculation of a calculation process 1, a calculation process 2, a calculation process 3, and a calculation process 4 needs to be performed in the service 1, to obtain a calculation result corresponding to the service 1. Calculation of the calculation process 1, the calculation process 3, a calculation process 5, and a calculation process 6 needs to be performed in the service 2, to obtain a calculation result of the service 2. Calculation of the calculation process 2, the calculation process 3, the calculation process 5, a calculation process 7, and a calculation process 8 needs to be performed in the service 3, to obtain a calculation result of the service 3. The user can first complete configuration of the calculation process 1 to the calculation process 8, and then select, based on different services, a calculation process corresponding to each service from the configured calculation processes.

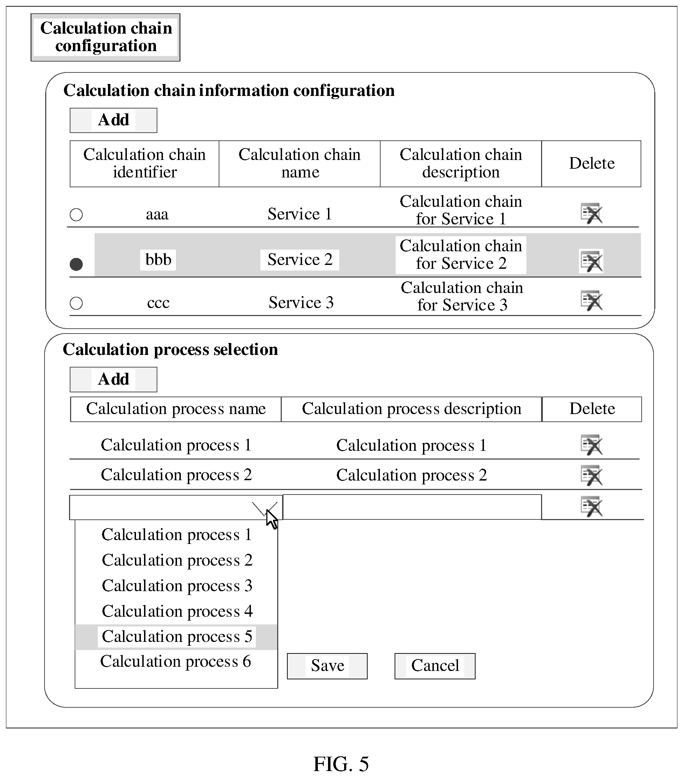

In this application, a set of calculation processes for implementing calculation of a service is referred to as a calculation chain. That is, one calculation chain includes one or more calculation processes, and different calculation chains can include one or more same calculation processes. FIG. 5 is a diagram of a calculation chain configuration interface according to this application. As shown in the figure, the calculation chain configuration interface includes calculation chain information configuration and calculation process selection. The calculation chain information configuration includes configuration of a calculation chain identifier, a calculation chain name, and a calculation chain description. FIG. 5 shows information about three calculation chains, that is, calculation chains corresponding to three services: a service 1, a service 2, and a service 3. The user can trigger an "Add" control in the calculation chain information configuration, to configure calculation chain information for a newly added service. After detecting an operation of triggering the "Add" control, the data tracing system 100 adds a new blank row to a calculation chain list, and the user can configure calculation chain information of the newly added calculation chain in the blank row. After receiving the calculation chain information configured by the user, the data tracing system 100 saves the corresponding calculation chain information.

The user can select a calculation chain from the calculation chain list. As shown in FIG. 5, the user selects the service 2, and then configures a calculation process required by the calculation chain corresponding to the service 2 during calculation process selection. As shown in FIG. 5, the user triggers the "Add" control in the calculation process selection part. In response to the trigger operation, the data tracing system 100 adds a blank row to the calculation process list. The user clicks an input box in the row, and the data tracing system 100 displays a currently configured calculation process, so that the user can select a calculation process. According to the foregoing method, the user can configure a plurality of calculation processes included in one calculation chain, and then trigger a "Save" control below the calculation chain configuration. After detecting an operation of triggering the "Save" control by the user, the data tracing system 100 records a configuration of the calculation chain corresponding to the service 2, that is, completes configuration of the service 2.

If the user requires a calculation result of a service, the user only needs to select or enter a calculation chain identifier or a calculation chain name corresponding to the service, or a service identifier or a service name of the service. The data tracing system 100 can determine a corresponding calculation chain, load and execute SQL corresponding to a calculation process included in the calculation chain, to obtain a calculation result of the service.

It should be noted that a plurality of steps included in a calculation chain are not sequentially performed. For example, a calculation chain corresponding to the service 3 includes a calculation process 2, a calculation process 3, a calculation process 5, a calculation process 7, and a calculation process 8. A process of executing the calculation chain is: First, the calculation process 2 and the calculation process 3 are separately executed. Then, a calculation result of the calculation process 2 and a calculation result of the calculation process 3 are used as inputs of the calculation process 5, to obtain a calculation result of the calculation process 5. Next, the calculation result of the calculation process 5 and a calculation result of the calculation process 7 are used as inputs of the calculation process 8, and the calculation process 8 is executed to obtain a calculation result corresponding to the service 3.

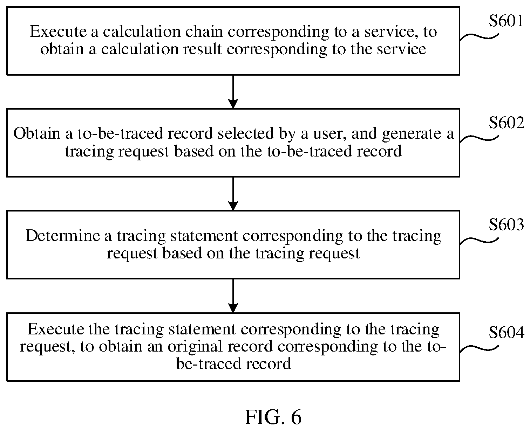

After completing the metadata configuration, the calculation process configuration, and configuration of the calculation chains corresponding to different services, the data tracing system 100 obtains calculation chains corresponding to the services and calculation processes included in the different calculation chains. The data tracing system 100 can implement calculation of different services based on the foregoing configuration, to obtain calculation results corresponding to the services. When the user wants to view a calculation result corresponding to a service, the data tracing system 100 executes a calculation chain corresponding to the service, that is, executes one or more calculation processes included in the calculation chain, to obtain the calculation result corresponding to the service. In one calculation process, one or more result tables can be obtained based on one or more source data tables. When the user or the data tracing system finds that an anomaly occurs in a record in a result table, or the user wants to view data in a data table that the record in the result table is obtained from, the data tracing system 100 can determine, according to the data tracing method provided in this application, an original record corresponding to the to-be-traced record. The following describes, with reference to the accompanying drawings, a data tracing method provided in this application. As shown in FIG. 6, FIG. 6 is a schematic flowchart of a data tracing method according to this application.

S601: Execute a calculation chain corresponding to a service, to obtain a calculation result corresponding to the service.

When a user wants to view a calculation result corresponding to a service, the user can select to execute a service instance corresponding to the service, that is, execute a calculation chain corresponding to the service by using a data tracing system 100, to obtain the calculation result corresponding to the service. For example, the user can select, on a service instance interface, a service identifier and select to execute a service corresponding to the service identifier. The service instance interface includes one or more services for which corresponding calculation chains have been configured. In this application, each calculation process in the calculation chain corresponds to a source data table and a result table, and the result table is obtained based on one or more source data tables.

It should be understood that the result table may be a new table generated based on the one or more source data tables, or the result table may be a table obtained by combining one of the source data tables and a field in another source data table. This is not specifically limited in this application. In this application, an example in which the result table is a generated new table is used to describe the data tracing method provided in this application.

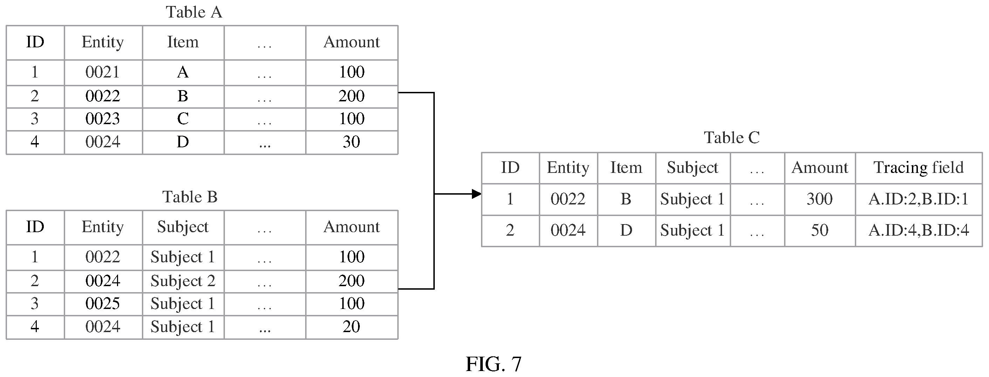

For example, as shown in FIG. 7, FIG. 7 is a diagram of obtaining a result table based on a source data table according to this application. The source data tables are Table A and Table B. Table A includes fields such as identity (Identity, ID), entity, item, and amount, and Table B includes fields such as ID, entity, subject, and amount. Table A and Table B are source data tables, and a result table obtained by calculation is Table C shown in FIG. 7.

In this application, the result table includes a tracing field, and a field value of a tracing field corresponding to a record in the result table indicates an original record corresponding to the record. When a calculation process is executed to obtain a result table, the data tracing system 100 can determine a value of a tracing field based on a source data table used to obtain the result table and a configuration relationship corresponding to the calculation process. The field value of the tracing field includes one or more table identifiers and a filter condition corresponding to each table identifier. A table identifier indicates a source data table. The result table is obtained based on the one or more source data tables indicated by the one or more table identifiers. Therefore, a quantity of table identifiers included in the field value of the tracing field is equal to a quantity of source data tables used to generate the result table. A filter condition corresponding to a table identifier indicates an original record that is of a record in a result table and that is in a source data table represented by the table identifier.

For example, as shown in FIG. 7, Table C includes two records. Obtaining Table C based on Table A and Table B is a join operation, and a configuration relationship corresponding to a calculation process of obtaining Table C based on Table A and Table B is: summing amounts in records in which IDs are the same and subjects are a subject 1 in Table A and Table B. A record whose ID is 1 in Table C is obtained by summing amounts in a record whose ID is 2 in Table A and a record whose ID is 1 in Table B. A record whose ID is 2 in Table C is obtained by summing amounts in a record whose ID is 4 in Table A and a record whose ID is 4 in Table B.

Therefore, according to the foregoing configuration relationship, a value of a tracing field corresponding to the record whose ID is 1 in Table C is "A.ID:2;B.ID:1". The field includes table identifiers of two source data tables, that is, A and B, indicating that Table C is obtained based on Table A and Table B. A filter condition corresponding to the table identifier A is "ID:2", indicating that the record whose ID is 2 in Table A is an original record that is in Table A and that corresponds to the record whose ID is 1 in Table C. A filter condition corresponding to the table identifier B is "ID:1", indicating that the record whose ID is 1 in Table B is an original record that is in Table B and that corresponds to the record whose ID is 1 in Table C.

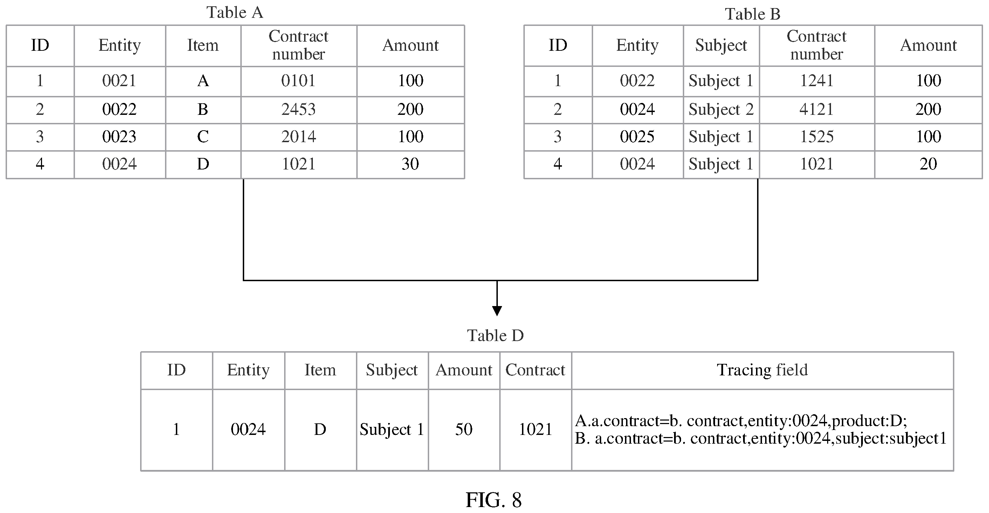

FIG. 8 is another diagram of obtaining a result table based on a source data table according to this application. Table D includes one record. A configuration relationship corresponding to a calculation process of obtaining Table D based on Table A and Table B is: summing amounts in records in which contract numbers are the same, entities are 0024, items are D, and subjects are a subject 1 in Table A and Table B.

Therefore, according to the foregoing configuration relationship, a value of a tracing field corresponding to the record in Table D is "A.a.contract=b.
contract,entity:0024,product:D;B.a.contract=b.contract,entity:0024,subject:subject1".

In a possible implementation, the data tracing system 100 can further obtain, based on the source data table and the result table, tracing information corresponding to the calculation process. Tracing information corresponding to a calculation process includes one or more tracing records, and a quantity of tracing records included in the tracing information is the same as a quantity of source data tables used in the calculation process. That is, each source data table corresponds to one tracing record. Each tracing record includes a table identifier of a result table, a table identifier of a source data table, and a tracing statement. The tracing statement is used to determine, when being executed, an original record that is in the source data table and that corresponds to a record in the result table.

For example, in a process of obtaining Table C by calculation based on Table A and Table B in FIG. 7, tracing information shown in Table 1 can be obtained. The tracing information includes two tracing records. A source data table item in Table 1 includes the table identifier A and the table identifier B, indicating that Table C is obtained based on Table A and Table B. $id in a tracing statement in Table 1 is a to-be-determined parameter, and is determined by a field value of a tracing field in Table C. A tracing record whose ID is 1 in Table 1 is a tracing record corresponding to Table A, and a tracing statement in the tracing record indicates that data whose ID is equal to $id is selected from Table A. That is, when Select *from step.A where id=$id is executed, one or more original records whose IDs are equal to a value of $id can be selected from Table A.

**Table 1**

| ID | Result table | Source data table | Tracing statement |
|---|---|---|---|
| 1 | C | A | Select *from A where ID=$id |
| 2 | C | B | Select *from B where ID=$id |

In a process of obtaining Table D based on Table A and Table B in FIG. 8, tracing information shown in Table 2 can be generated, and the tracing information includes two tracing records. The item of the source data table in Table 1 includes the table identifier A and the table identifier B, indicating that Table D is obtained based on Table A and Table B. $filterCondition, $product, and $subject in the tracing statement in Table 1 are to-be-determined parameters, and are determined based on the field value of the tracing field in the result table D. When a tracing statement in a record whose ID is 1 in Table 2 is executed, one or more original records that satisfy a condition can be selected from Table A.

**Table 2**

| ID | Result table | Source data table | Tracing statement |
|---|---|---|---|
| 1 | D | A | Select *from A , B |
| | | | where a.entity=$filterCondition and |
| | | | a.produce=$product and a.subject=$subject |
| | | | a.contract=b.contract |
| 2 | D | B | Select *from A , B |
| | | | where b.entity=$filterCondition and |
| | | | b.produce=$product and b.subject=$subject |
| | | | a.contract=b.contract |

S602: Obtain a to-be-traced record selected by the user, and generate a tracing request based on the to-be-traced record.

For a result table generated by any calculation process, the user can view data in the result table. For example, the user finds that an anomaly occurs in a record in the result table, or the user wants to view data in a data table that a record in the result table is obtained from. The user may select the record from the result table. In this application, the record selected by the user is referred to as a to-be-traced record.

After obtaining information about the to-be-traced record selected by the user, the data tracing system 100 obtains, from the result table based on the to-be-traced record, a field value of a tracing field corresponding to the to-be-traced record, and generates the tracing request based on the field value of the tracing field corresponding to the to-be-traced record. The tracing request includes a tracing parameter, and the tracing parameter includes the field value of the tracing field corresponding to the to-be-traced record. The tracing request indicates to find original records corresponding to the to-be-traced record in the one or more source data tables, and the original records include one or more records in each source data table. For example, for Table C in FIG. 7, if the to-be-traced record is a record whose ID is 1 in Table C, the tracing parameter included in the tracing request is "A.ID:2;B.ID:1".

It should be understood that, after the data tracing system 100 obtains the calculation result corresponding to the service, the data tracing system 100 displays, by using a client, the calculation result corresponding to the service to the user. The tracing request is generated by the client after the client obtains the field value of the tracing field corresponding to the to-be-traced record in response to an operation of selecting the to-be-traced record in the result table by the user.

S603: Determine a tracing statement corresponding to the tracing request based on the tracing request.

After obtaining the tracing request, the data tracing system 100 determines the tracing statement corresponding to the tracing request based on the tracing parameter in the tracing request. In this application, the result table is obtained by calculation based on data in the one or more source data tables. Therefore, each tracing request corresponds to one or more tracing statements, each source data table corresponds to one tracing statement, and each tracing statement is used to determine, from one source data table, an original record corresponding to the to-be-traced record.

In this application, the tracing statement is used to obtain, from the source data table, an original record corresponding to the to-be-traced record, that is, select one or more records from the source data table. Therefore, the tracing statement may be expressed in a form of "Select *from $table where $FilterCriteria". $table indicates a name or identifier of the source data table, and $FilterCriteria indicates a filter condition in a conditional statement. After obtaining the tracing parameter, the data tracing system 100 generates the corresponding tracing statement based on the tracing parameter.

For example, for Table D in FIG. 8, if the to-be-traced record is a record whose ID is 1 in Table D, the tracing parameter included in the tracing request is "A.ID:2;B.ID:1", and corresponding tracing statements generated by the data tracing system 100 are "Select *from A where id=2" and "Select *from B where id=1".

For Table D in FIG. 8, if the to-be-traced record is a record in Table D, the tracing parameter included in the tracing request is "A.a.contract=b. contract,entity:0024,product:D;B. a.contract=b. contract,entity:0024,subject:subject1". A corresponding tracing statement generated by the data tracing system 100 is:
Select * from A,B
where a.entity=0024 and
a.produce=D
a.contract=b.contract
   and
Select * from A,B
where b.entity=0024 and
b.subject=subject1
a.contract=b.contract

In a possible implementation, if the data tracing system 100 generates the tracing information shown in Table 1 or Table 2 in a process of executing the service instance, the tracing request further includes the table identifier of the result table. The table identifier of the result table is used to find, from the tracing information, a tracing record corresponding to the table identifier. The tracing information includes a tracing record generated by performing a plurality of calculation processes in the process of executing the service instance.

After receiving the tracing request, the data tracing system 100 determines, based on the table identifier of the result table in the tracing request, a tracing record corresponding to the result table. For example, two tracing records shown in Table 1 are found by using a table identifier of Table C. Therefore, the two tracing records corresponding to the tracing request can be determined based on the tracing request, and a tracing record includes one tracing statement. For example, the tracing statement Select *from A where ID=$id is used to determine an original record that is in Table A and that corresponds to a record in the Table C.

The tracing parameter includes the field value of the tracing field corresponding to the to-be-traced record, and the field value includes the table identifiers of the one or more source data tables and the filter condition corresponding to each table identifier. After obtaining the tracing statement corresponding to the tracing request, the data tracing system 100 determines a tracing record based on a table identifier of a source data table in the tracing parameter, and assigns a value to a to-be-determined parameter in the tracing statement in the tracing record, to obtain a corresponding executable tracing statement.

For example, if the to-be-traced record is the record whose ID is 2 in Table C, the tracing parameter includes "A.ID: 4; B.ID: 4", and a tracing statement corresponding to Table A is "Select *from A where ID=$id". An ID in a filter condition corresponding to Table A is assigned to the to-be-determined parameter $id, to obtain an executable tracing statement "Select *from A where ID=4". A tracing statement corresponding to Table B is "Select *from B where ID=$id", and an ID in the filter condition corresponding to Table A is assigned to the to-be-determined parameter $id, to obtain an executable tracing statement "Select *from B where ID=4".

S604: Execute the tracing statement corresponding to the tracing request, to obtain the original record corresponding to the to-be-traced record.

After obtaining the tracing statement corresponding to the tracing request, the data tracing system 100 executes each tracing statement, to obtain the source data table and the original record corresponding to the to-be-traced record in the source data table.

It should be understood that, if the to-be-traced record is a record in which an anomaly occurs and that is selected by the user, an original record corresponding to the to-be-traced record is obtained by using the foregoing method. That is, an anomaly source is located. The user can analyze a cause of the anomaly in the to-be-traced record based on the original record.

For example, if the to-be-traced record is the record whose ID is 2 in Table C, the tracing statement corresponding to the tracing request includes a tracing statement "Select *from A where ID=4" corresponding to Table A and a tracing statement "Select *from B where ID=4" corresponding to Table B. After the two tracing statements are executed, Table A and Table B can be output, and the record whose ID is 4 in Table A and the record whose ID is 4 in Table B are displayed in a manner different from other records in Table A and Table B, indicating that the record whose ID is 4 in Table A and the record whose ID is 4 in Table B are original records corresponding to the to-be-traced record whose ID is 2 in Table C.

For brief description, the foregoing method embodiment is represented as a series of actions. However, a person skilled in the art should appreciate that the present invention is not limited to the described order of the actions. In addition, a person skilled in the art should also appreciate that all the embodiments described in the specification are preferred embodiments, and the related actions are not necessarily mandatory to the present invention. Another appropriate step combination that can be figured out by a person skilled in the art based on the content described above shall also fall within the protection scope of the present invention.

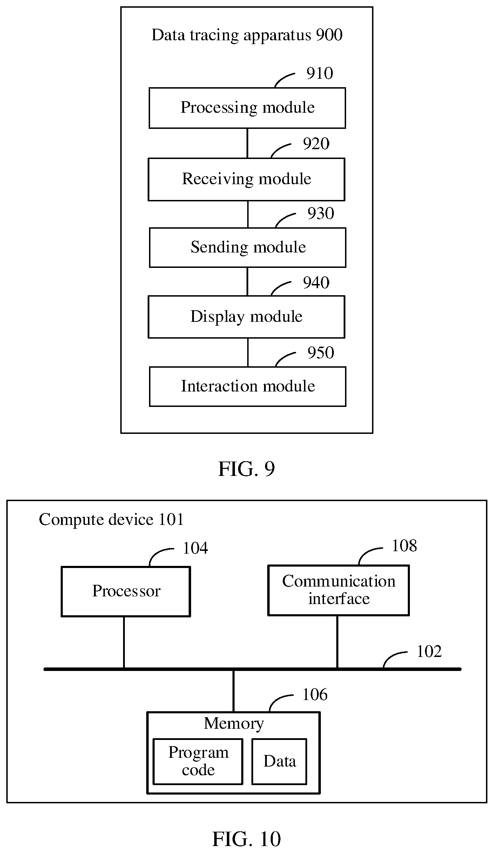

The foregoing describes in detail the data tracing method provided in this application with reference to FIG. 1 to FIG. 8. The following describes a data tracing apparatus, a compute device, and a compute device cluster provided in this application with reference to FIG. 9 to FIG. 11.

As shown in FIG. 9, FIG. 9 is a diagram of a structure of a data tracing apparatus according to this application. The data tracing apparatus 900 includes a processing module 910 and a receiving module 920.

The receiving module 920 is configured to obtain a tracing request, where the tracing request is used to request to find a cause of an anomaly of a to-be-traced record in a result table. The tracing request includes a tracing parameter, the result table includes a tracing field, a field value of the tracing field in the result table includes one or more table identifiers and filter conditions corresponding to the one or more table identifiers, the result table is obtained based on source data tables corresponding to the one or more table identifiers in the tracing field, and the tracing parameter includes a field value of a tracing field corresponding to the to-be-traced record. The to-be-traced record is any record in the result table. The result table is obtained based on the one or more source data tables. Therefore, the tracing request is also used to request to search for original records that are in the source data tables and that correspond to the to-be-traced record in the result table. The original records include one or more records in each source data table, and the to-be-traced record is obtained based on the original records corresponding to the to-be-traced record. For example, a user finds that an anomaly occurs in a record in the result table, or the user wants to view data in a data table that a record in the result table is obtained from. The user can select the record, that is, the to-be-traced record.

The processing module 910 is configured to: determine a tracing statement based on the tracing request, and execute the tracing statement to determine the cause of the anomaly corresponding to the tracing request. The tracing statement is used to locate original records corresponding to the to-be-traced record in the one or more source data tables, and the to-be-traced record is obtained based on the original records in the one or more source data tables. For an operation performed by the processing module 910 after obtaining the tracing request, refer to related operations in S603 and S604 in the method embodiment corresponding to FIG. 6. Details are not described herein again.

The processing module 910 is further configured to implement a related operation in S601, to obtain a calculation result corresponding to a service.

In this application, the data tracing apparatus 900 further includes a sending module 930 and a display module 940. After obtaining the calculation result, the processing module 910 sends the calculation result to the display module 940 through the sending module 930, and displays the calculation result to the user for viewing by the user.

The data tracing apparatus 900 further includes an interaction module 950. The interaction module 950 is configured to: receive an operation of selecting the to-be-traced record from the result table by the user, generate the tracing request in response to the operation, and send the tracing request to the receiving module 920.

The display module 940 is further configured to display the configuration interfaces shown in FIG. 2 to FIG. 5. The interaction module 950 is configured to receive related configuration information entered by the user on each configuration interface, and the processing module 910 records the configuration information, and generates a reference relationship between service logic code and a calculation process.

Optionally, the processing module 910, the receiving module 920, and the sending module 930 in the data tracing apparatus 900 are deployed in a back-end compute device or a compute device cluster (including at least one compute device), and the display module 940 and the interaction module 950 are deployed in a front-end terminal device used by a user.

It should be understood that FIG. 9 merely shows an example of a division manner of the data tracing apparatus 900. In actual application, the data tracing apparatus 900 may further have another division manner. This is not specifically limited in this application.

This application further provides a compute device. As shown in FIG. 10, FIG. 10 is a diagram of the compute device according to an embodiment of this application. The compute device 101 includes a bus 102, a processor 104, a memory 106, and a communication interface 108. The processor 104, the memory 106, and the communication interface 108 communicate with each other through the bus 102. The compute device 101 may be a server or a terminal device. It should be understood that a quantity of processors and a quantity of memories in the compute device 101 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 10, but it does not mean that there is only one bus or only one type of bus. The bus 102 may include a path for transmitting information between components (for example, the memory 106, the processor 104, and the communication interface 108) of the compute device 101.

It should be noted that the processor 104 may be a central processing unit (Central Processing Unit, CPU), or may include the CPU and another hardware chip. The hardware chip may be of a plurality of types, for example, a coprocessing unit, including any one of chips such as a graphics processing unit (graphics processing unit, GPU), a tensor processing unit (tensor processing unit, TPU), a programmable logic device (programmable logic device, PLD), a complex programmable logic device (complex programmable logic device, CPLD), a field programmable gate array (field programmable gate array, FPGA), or a digital signal processor (digital signal processor, DSP). The compute device 101 may include one or more hardware chips of any one of the foregoing types, or may include a plurality of types hardware chips. This is not specifically limited in this application.

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to implement the method described in the method embodiment corresponding to FIG. 6 and the configuration processes shown in FIG. 2 to FIG. 5. In other words, the memory 106 stores program code used to implement a function of the data tracing system 100, to implement the data tracing method shown in FIG. 6 and the configuration processes shown in FIG. 2 to FIG. 5. The program code includes one or more software modules. The one or more software modules include the processing module 910, the receiving module 920, and the like in the data tracing apparatus 900 shown in FIG. 9. The processor 104 executes executable program code to implement the method corresponding to FIG. 6 and corresponding procedures of the configuration processes shown in FIG. 2 to FIG. 5. Details are not described herein again.

The communication interface 108 may be a wired interface or a wireless interface, and is configured to communicate with another module or device, for example, receive the tracing request, and receive configuration information entered by the user through a configuration interface. The wired interface may be an Ethernet interface, a local interconnect network (local interconnect network, LIN), or the like. The wireless interface may be a cellular network interface, a wireless local area network interface, or the like. This application further provides a compute device cluster. The compute device cluster includes a plurality of compute devices 101. The compute device may be a server, for example, a central server, an edge server, a local server in a local data center, or a server in a data center of a cloud environment. In some embodiments, the compute device may alternatively be a terminal device, for example, a desktop computer, a notebook computer, or a smartphone.

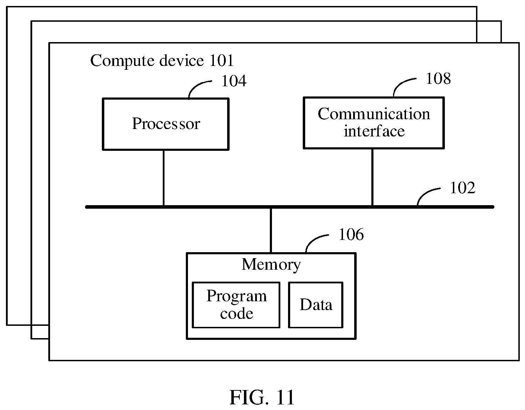

As shown in FIG. 11, FIG. 11 is a diagram of a compute device cluster according to this application. Memories 106 in the plurality of compute devices 101 in the compute device cluster may store same program code used to implement the data tracing method in the embodiment shown in FIG. 6 and program code used to implement the configuration methods shown in FIG. 2 to FIG. 5.

In some possible implementations, the memories 106 in the plurality of compute devices 101 in the compute device cluster may also separately store some instructions used to perform the foregoing method. To be specific, the memories 106 in different compute devices 101 in the compute device cluster may store different instructions, which are separately used to perform the data tracing method shown in FIG. 6 and some functions of the configuration processes shown in FIG. 2 to FIG. 5. A combination of the plurality of compute devices 101 may jointly implement the data tracing method in the embodiment shown in FIG. 6 and the configuration processes shown in FIG. 2 to FIG. 5.

In some possible implementations, the plurality of compute devices 101 in the compute device cluster may be connected over a network. The network may be a wide area network, a local area network, or the like. For example, two compute devices 101A and 101B are connected over a network. Specifically, each compute device is connected to the network through a communication interface in the compute device.

This application further provides a computer program product including instructions. The computer program product may be software or a program product that includes instructions and that can run on a compute device or can be stored on any usable medium. When the computer program product runs on at least one compute device, the at least one compute device is enabled to perform the program code of the data tracing method in the embodiment shown in FIG. 6 and the configuration processes shown in FIG. 2 to FIG. 5.

This application further provides a computer-readable storage medium. The computer-readable storage medium may be any usable medium that can be used for storage by a compute device, or a data storage device, like a data center, including one or more usable media. The usable medium may be a magnetic medium (for example, a floppy disk, a hard disk drive, or a magnetic tape), an optical medium, a semiconductor medium (for example, a solid-state drive), or the like. The computer-readable storage medium includes instructions, and the instructions instruct the compute device to implement program code of the data tracing method in the embodiment shown in FIG. 6 and the configuration methods shown in FIG. 2 to FIG. 5.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data tracing method, comprising:
obtaining a tracing request, wherein the tracing request is used to request to find a cause of an anomaly of a to-be-traced record in a result table, the tracing request comprises a tracing parameter, the result table comprises a tracing field, a field value of the tracing field comprises one or more table identifiers and filter conditions corresponding to the one or more table identifiers, the result table is obtained based on source data tables corresponding to the one or more table identifiers, and the tracing parameter comprises a field value of a tracing field corresponding to the to-be-traced record; and
determining a tracing statement based on the tracing request, and executing the tracing statement to determine the cause of the anomaly corresponding to the to-be-traced record, wherein the tracing statement is used to locate original records corresponding to the to-be-traced record in the one or more source data tables, and the to-be-traced record is obtained based on the original records in the one or more source data tables.

2. The method according to claim 1, wherein each of the one or more table identifiers corresponds to one source data table, a filter condition corresponding to a first table identifier is a condition for filtering a first source data table when the tracing statement is executed, the first table identifier is one of the one or more table identifiers, and an identifier of the first source data table is the first table identifier.

3. The method according to claim 2, wherein before obtaining the tracing request, the method further comprises:
obtaining configuration information of a first calculation process, wherein the configuration information comprises input information, output information, and a field mapping relationship, the input information comprises the one or more table identifiers, the output information comprises a target field comprised in the result table, and the field mapping relationship indicates a mapping relationship between a source field in the one or more source data tables and a corresponding destination field in the result table;
generating service logic code based on the configuration information of the first calculation process, wherein the first calculation process is one of one or more calculation processes comprised in a service; and
executing the service logic code corresponding to the first calculation process, to obtain the result table, and generating a field value of a tracing field corresponding to each record in the result table, wherein the filter conditions corresponding to the one or more table identifiers are generated based on the configuration information.

4. The method according to claim 3, wherein the configuration information further comprises a calculation process type corresponding to the first calculation process, and the calculation process type indicates a parsing rule for a calculation process; and
generating the service logic code based on the configuration information of the first calculation process comprises:
generating the service logic code based on the configuration information of the first calculation process and the calculation process type corresponding to the first calculation process, wherein
the calculation process type comprises a general type and a customized type, the general type comprises a data set type, a join type, and a derivation type, the data set type indicates that a calculation process is to load data or output data, the join type indicates that a calculation process is to process data between two or more tables, and the derivation type indicates that a calculation process is to add a column to a data table; and
the customized type is a calculation type tailored to a specific application scenario, in a tax scenario, the customized type comprises a conversion type, an allocation type, and an accumulation type, the conversion type indicates that a calculation process is to perform exchange rate conversion, the allocation type indicates that a calculation process is to allocate amounts based on contract products, and the accumulation type indicates that a calculation process is to perform annual accumulation or quarterly accumulation.

5. The method according to any one of claims 2 to 4, wherein determining the tracing statement based on the tracing request comprises:
obtaining the first table identifier and the filter condition corresponding to the first table identifier in the tracing request; and
determining a first tracing statement based on the first table identifier and the filter condition corresponding to the first table identifier, wherein
the first tracing statement comprises the first table identifier and the filter condition corresponding to the first table identifier, the first table identifier indicates a source data table queried by the first tracing statement, the filter condition corresponding to the first table identifier is a filter condition corresponding to a conditional statement in the first tracing statement, and each of the one or more source data tables corresponds to one tracing statement.

6. The method according to claim 5, wherein executing the tracing statement to determine the cause of the anomaly corresponding to the tracing request comprises:
executing the first tracing statement, loading the first source data table based on the first table identifier in the first tracing statement, and filtering data in the first source data table based on the filter condition corresponding to the first table identifier, to determine a cause of an anomaly corresponding to the tracing request in the first source data table.

7. The method according to any one of claims 1 to 6, wherein before obtaining the tracing request, the method further comprises:
determining that an anomaly occurs in data recorded in the to-be-traced record;
obtaining the field value of the tracing field corresponding to the to-be-traced record; and
generating the tracing request based on the field value of the tracing field corresponding to the to-be-traced record.

8. The method according to claim 3 or 4, wherein the method further comprises:
obtaining a service identifier of a to-be-executed service, wherein the to-be-executed service comprises one or more calculation processes; and
determining the one or more calculation processes based on the service identifier, and executing the one or more calculation processes, to obtain a result corresponding to the to-be-executed service, wherein the first calculation process is one of the one or more calculation processes comprised in the to-be-executed service.

9. The method according to claim 8, wherein the configuration information further comprises a field filter condition, and the field filter condition is used to select data that satisfies the field filter condition from a corresponding source data table.

10. A data tracing apparatus, comprising:
a receiving module, configured to obtain a tracing request, wherein the tracing request is used to request to find a cause of an anomaly of a to-be-traced record in a result table, the tracing request comprises a tracing parameter, the result table comprises a tracing field, a field value of the tracing field comprises one or more table identifiers and filter conditions corresponding to the one or more table identifiers, the result table is obtained based on source data tables corresponding to the one or more table identifiers, and the tracing parameter comprises a field value of a tracing field corresponding to the to-be-traced record; and
a processing module, configured to: determine a tracing statement based on the tracing request, and execute the tracing statement to determine the cause of the anomaly corresponding to the to-be-traced record, wherein the tracing statement is used to locate original records corresponding to the to-be-traced record in the one or more source data tables, and the to-be-traced record is obtained based on the original records in the one or more source data tables.

11. A compute device, comprising a processor and a memory, wherein the processor executes instructions stored in the memory, to implement the method according to any one of claims 1 to 9.

12. A computer-readable storage medium, comprising computer program instructions, wherein when the computer program instructions are executed by a compute device, the compute device performs the method according to any one of claims 1 to 9.
